# EUROPEAN PATENT SPECIFICATION

(11) **EP 2 784 018 B1**
(45) Date of publication and mention of the grant of the patent: **14.06.2017**
(21) Application number: 14154432.0
(22) Date of filing: 10.02.2014
(51) Int. Cl.: B66C 23/20

(54) **Lifting apparatus, wind turbine generator and maintenance method for wind turbine generator**
Hubvorrichtung, Windturbinengenerator und Wartungsverfahren für einen Windturbinengenerator
Appareil de levage, générateur de turbine éolienne et procédé de maintenance pour générateur de turbine éolienne

(30) Priority: 28.03.2013 JP 2013069201
(43) Date of publication of application: 01.10.2014
(73) Proprietor: MITSUBISHI HEAVY INDUSTRIES, LTD., Tokyo 108-8215 (JP)
(72) Inventor: Numajiri, Tomohiro, TOKYO, 108-8215 (JP); Fujioka, Yoshihiro, YOKOHAMA-SHI, 231-8715 (JP)
(74) Representative: Intès, Didier Gérard André

(56) References cited:
- WO-A1-2005/031159
- WO-A1-2007/107817
- WO-A1-2009/155934

## Description

### Technical Field

The present disclosure relates to a lifting apparatus, a wind turbine generator equipped with this lifting apparatus, and a maintenance method for the wind turbine generator.

### Background Art

In recent years, from a perspective of preserving the environment, it has become popular to use wind turbine generators utilizing wind power in a form of renewable energy. Generally, a wind turbine generator includes a rotor having a hub and blades attached to the hub. The rotor is installed to a nacelle mounted on a tower which is installed onshore or offshore. In this type of wind turbine generator, rotor rotates when the blades receive wind, the rotation of the rotor is transmitted via a drive train to a generator housed in the nacelle, and then electric power is generated by the generator.

The nacelle mounted on the tower 1 accommodates a variety of components. When assembling or performing maintenance of the wind turbine generator, those components need to be transferred.

Transferring objects such as a maintenance object part exist in many places inside the nacelle. To transfer the transferring object between the nacelle and the tower, or between a nacelle interior space and a nacelle exterior space, a lifting apparatus such as a crane is used.

As a lifting apparatus used for a wind turbine generator, there is a nacelle mounted maintenance system described in Patent Reference 1. This maintenance system uses a jib crane. The jib crane is configured by a support column and a jib which is attached to the support column and is pivotable around the support column. The jib crane has a cantilever structure. Components are lifted and lowered by a hoisting apparatus attached to an end of the jib, such as a hoist and a winch.

Patent Reference 2 describes a crane installed in a nacelle of a wind turbine generator. The crane is configured such that an aft end of a crane beam is secured to an aft part of the nacelle, and the crane beam is rotatable around the fixed part as a pivot point along an arc shaped rail fixed to a main bearing.

### [Citation List]

### [Patent Reference]

[Patent Reference 1]
   WO 2012/105971
[Patent Reference 2]
   US 2008/0245756 A

### [Summary]

### [Technical Problem]

For a crane used for maintenance of a wind turbine generator, it is desired to simplify the structure and minimize the weight so as to lower a production cost and a maintenance cost of a crane apparatus and the wind turbine generator.

However, the jib crane described in Patent Reference 1 has a cantilever structure. In the cantilever structure, a hoisted load is at a position distant from the support column and thus the moment is applied to the support column. Therefore, it is necessary to attain rigidity of the post. This, however, requires increase in size of the support column, e.g. the size, resulting in weight increase.

The crane described in Patent Reference 2 has a both end supported structure. Thus, the required rigidity is small compared to the jib crane and the like. However, the shape of the fixed rail is limited to a circular arc shape and thus, a movable range (a fan-shaped range) of the crane beam along the circular arc-shaped fixed rail is also limited.

It is an object of the present invention to provide a wind turbine generator and a lifting apparatus for a wind turbine generator, which is configured such that a movable range in a nacelle of the wind turbine generator can be arbitrarily set and which is light in weight and compact.

### [Solution to Problem]

A lifting apparatus installed in a nacelle for a wind turbine generator according to at least one embodiment of the present invention comprises:
a lifting unit;
a beam configured to support the lifting unit;
a rail placed in the nacelle and configured to engage with a distal end of the beam; and
a support column installed in a standing manner in the nacelle and configured to rotatably support the beam so that the distal end of the beam moves along the rail,
wherein the beam is attached to the support column to be slidable relative to the support column in a longitudinal direction of the beam.

According to the above lifting apparatus for the wind turbine generator,
the beam is configured to slide relative to the support column. Thus, even if the distance between the support column and the rail is not constant, i.e. if the shape of the rail is not circular arc around the support column, the beam is rotatable while the distal end of the beam is engaged with the rail. Therefore, rails of any shape can be used. Specifically, the shape of the rail is not limited to a circular arc having single radius of curvature, but may include a combination of arcs having different radiuses, a combination of a straight line part and a curved part, and so on. Further, the beam is supported by the rail and the support column, and thus, compared to the cantilever structure, the required rigidity for the beam and the support column is reduced, and it is possible to achieve weight reduction and size reduction of the lifting apparatus.

In some embodiments, the rail may be at least in part constituted by an upper frame of the nacelle which is disposed along an edge of a ceiling of the nacelle.

By using the upper frame of the nacelle to constitute at least a part of the rail, it is possible to install the lifting apparatus in a limited space inside the nacelle. As a result, it is possible to reduce weight of the nacelle.

In some embodiments, the upper frame has at least one corner, and the rail includes a part of the upper frame except the at least one corner, and a curved frame which is disposed on each of the at least one corner and connected to said part of the upper frame.

Even in the case where the upper frame has a corner which can possibly hinder sliding of the beam, the corner of the upper frame can be replaced by a curved frame and the rest of the upper frame except the corner can be used as the rail. As a result, the beam can smoothly slide along the rail.

In some embodiments, the beam is supported by a nacelle frame which constitutes at least a part of the rail and which bears a structural strength of the nacelle.

By using the nacelle frame to support the beam in this manner, the beam can be reliably supported.

In some embodiments, the lifting apparatus for the wind turbine generator further comprises:
a first member rotatably attached to a distal end of the support column and configured to engage with the beam; and
a first guide part provided for the first member to guide the beam so that the beam is slidable relative to the first member in the longitudinal direction.

By rotating the first member which is engaged with the beam, the beam can be rotated around the support column. Further, by means of the first guide part provided for the first member, the beam can slide relative to the first member in the longitudinal direction. With the above slidable configuration of the beam relative to the support column, even when the distance between the support column and the rail is not constant, i.e. when the shape of the rail is not circular arc around the support column, the beam is rotatable while the distal end of the beam is engaged with the rail. Therefore, rails of any shape can be used. Specifically, the shape of the rail is not limited to a circular arc having single radius of curvature, but may include a combination of arcs having different radiuses, a combination of a straight line part and a curved part, and so on. Further, the beam is supported by both the rail and the support column, and thus, compared to the cantilever structure, the required rigidity for the beam and the support column is reduced, and it is possible to achieve weight reduction and size reduction of the lifting apparatus.

In some embodiments, the lifting apparatus for the wind turbine generator may further comprise:
a first bearing provided between the first member and the distal end of the support column so as to rotatably support the first member to the support column; and
a first roller provided for the first member and configured to contact the beam while rotating about a rotation axis of the first roller, the rotation axis extending along a width direction of the beam,
wherein the first guide part comprises at least two first side rollers disposed on both sides of the beam in the width direction to contact side faces of the beam.

The rotation of the first member relative to the support column is facilitated by the operation of the first bearing facilitates. Thus, the beam can smoothly pivot around the support column. Further, sliding resistance between the first member and the beam is reduced by the operation of the first roller. Thus, the beam can slide smoothly relative to the first member in the longitudinal direction of the beam. Furthermore, sliding resistance between the guide part and the beam is reduced by using the first guide part including at least two first side rollers disposed on both sides of the beam in the width direction. Thus, the beam can slide more smoothly in the longitudinal direction.

In some embodiments, the lifting apparatus for the wind turbine generator may further comprise:
a second member rotatably attached to the distal end of the beam and configured to engage with the rail; and
a second guide part provided for the second member to guide the second member so that the second member is slidable along the rail.

The angle of the beam relative to the rail is variable during rotation of the beam around the support column, by rotating the second member which is engaged with the rail. As a result, the beam can rotate smoothly around the support column. Further, the second member is configured to be slidable along the rail by means of the second guide part provided for the second member. As a result, the distal end of the beam can move smoothly along the rail.

In some embodiments, the lifting apparatus for the wind turbine generator may further comprise:
a second bearing provided between the second member and the distal end of the beam to rotatably support the second member to the beam; and
a second roller provided for the second member and configured to contact the rail while rotating about a rotation axis of the second roller, the rotation axis extending along a width direction of the rail,
wherein the second guide part comprises at least two second side rollers disposed on both sides of the rail in the width direction to contact side faces of the rail.

The rotation of the second member relative to the distal end of the beam is facilitated by the operation of the second bearing facilitates. Thus, the angle between the beam and the rail can be varied smoothly during rotation of the beam around the support column. Further, sliding resistance between the second member and the rail is reduced by the operation of the second roller. Thus, the second member can slide smoothly along the rail. Furthermore, sliding resistance between the second guide part and the rail is reduced by using the second guide part including at least two second side rollers disposed on both sides of the beam in the width direction. Thus, the distal end of the beam can move more smoothly along the rail.

In some embodiments, the lifting unit includes one of a winch, a hoist or a crane.

A wind turbine generator according to at least one embodiment of the present invention comprises:
a nacelle; and
a lifting apparatus installed in the nacelle,
wherein the lifting apparatus comprises: a lifting unit; a beam configured to support the lifting unit; a rail placed in the nacelle and configured to engage with a distal end of the beam; and a support column installed in a standing manner in the nacelle and configured to rotatably support the beam so that the distal end of the beam moves along the rail, and
wherein the beam is attached to the support column to be slidable relative to the support column in a longitudinal direction of the beam.

According to the above wind turbine generator, the beam is configured to be slidable relative to the support column in a longitudinal direction of the beam. Thus, even if the distance between the support column and the rail is not constant, i.e. if the shape of the rail is not circular arc around the support column, the beam is rotatable while the distal end of the beam is engaged with the rail. Therefore, rails of any shape can be used. Specifically, the shape of the rail is not limited to a circular arc having single radius of curvature, but may include a combination of arcs having different radiuses, a combination of a straight line part and a curved part, and so on. Further, the beam is supported by both the rail and the support column, and thus, compared to the cantilever structure, the required rigidity for the beam and the support column is reduced, and it is possible to achieve weight reduction and size reduction of the lifting apparatus.

In some embodiment, the wind turbine generator further comprises:
at least one blade;
a hub on which each of the at least one blade is mounted;
a main shaft connected to the hub; and
a pair of main bearings configured to support the main shaft to the nacelle,
wherein the support column is supported by a bearing housing of rear one of the pair of main bearings which is disposed farther from the hub.

The bearing housing of the main bearing is normally fixed to a member of high rigidity which is called a nacelle bedplate. Therefore, the bearing housing of the main bearing (the rear bearing) is utilized to support the support column of the lifting apparatus, so as to reliably support the lifting apparatus.

Further, an over-hang amount from the front bearing affects a moment load on a shaft system significantly. Thus, it is common to reduce the over-hang amount by bringing the front bearing closer to the hub. Therefore, the front bearing is often disposed closer to a nacelle front. In contrast, the rear bearing is disposed closer to the center of the nacelle than the front bearing, and the nacelle interior space normally expands to the rear past the rear bearing so as to accommodate a variety of devices and equipments. Thus, by supporting the support column of the lifting apparatus by using the bearing housing of the rear bearing disposed near the center of the nacelle, it is possible to arrange the support column near the center of the nacelle and thus, the movable range of the lifting unit is increased over a large area around the center of the nacelle.

A maintenance method for a wind turbine generator according to at least one embodiment of the present invention comprises:
an object transferring step of transferring an object using a lifting apparatus installed in a nacelle of the wind turbine generator,
wherein the lifting apparatus comprises: a lifting unit for lifting the object; a beam configured to support the lifting unit; a rail placed in the nacelle and configured to engage with a distal end of the beam; and a support column installed in a standing manner in the nacelle and configured to rotatably support the beam, and
wherein, in the object transferring step, the beam is rotated about the support column to move the distal end of the beam along the rail while allowing the beam to slide relative to the support column in a longitudinal direction of the beam so as to move the lifting unit.

According to the above maintenance method for the wind turbine generator, the beam is configured to be slidable relative to the support column in a longitudinal direction of the beam. Thus, even if the distance between the support column and the rail is not constant, i.e. if the shape of the rail is not circular arc around the support column, the beam is rotatable while the distal end of the beam is engaged with the rail. Therefore, rails of any shape can be used. Specifically, the shape of the rail is not limited to a circular arc having single radius of curvature, but may include a combination of arcs having different radiuses, a combination of a straight line part and a curved part, and so on. Further, the beam is supported by both the rail and the support column, and thus, compared to the cantilever structure, the required rigidity for the beam and the support column is reduced, and it is possible to achieve weight reduction and size reduction of the lifting apparatus.

In some embodiments, the wind turbine generator comprises a tower which is configured to support the nacelle via a yaw bearing and, in the object transferring step, the object is transferred by the lifting apparatus between the nacelle and the tower through an inside of the yaw bearing.

In some embodiments, in the object transferring step, the object is transferred by the lifting apparatus between an interior space and an exterior space of the nacelle through an opening provided in a floor of the nacelle.

In some embodiments, the object is at least one component of a temporary lifting apparatus which has a lifting capacity larger than the lifting apparatus,
in the object transferring step, the at least one component is transferred into the nacelle by the lifting apparatus, and
the maintenance method further comprises:
after the object transferring step, an installation step of assembling the at least one component into the temporary lifting apparatus and installing the temporary lifting apparatus in the nacelle; and
a heavy object transferring step of transferring a heavy object which is heavier than the object by the temporary lifting apparatus between an interior space and an exterior space of the nacelle through an opening provided in a floor of the nacelle.

As described above, the light-weight and compact lifting apparatus having the above configuration is permanently installed and when transferring of a heavy object which is difficult for this permanently-installed lifting apparatus to transfer, the temporary lifting apparatus which has a larger lifting capacity is used. Thus, only the permanently-installed lifting apparatus exists in the nacelle during the normal operation of the wind turbine generator. As a result, the space occupied by the lifting apparatus is reduced, and it is possible to achieve weight reduction and size reduction of the nacelle.

### [Advantageous Effects]

According to at least some embodiments of the present invention, the beam is configured to be slidable relative to the support column. Thus, even if the distance between the support column and the rail is not constant, the beam is rotatable while the distal end of the beam is engaged with the rail. Therefore, the shape of the rail is not limited to a circular arc having single radius of curvature and may be any shape. Further, the beam is supported by both the rail and the support column, and thus, compared to the cantilever structure, the required rigidity for the beam and the support column is reduced, and it is possible to achieve weight reduction and size reduction of the lifting apparatus.

### [Brief Description of Drawings]

[FIG.1] FIG.1 is a schematic view of an overall configuration of a wind turbine generator in relation to an embodiment.
[FIG.2] FIG.2 is an oblique perspective view of an exemplary configuration inside a nacelle of a lifting apparatus in relation to an embodiment.
[FIG.3] FIG. 3 is a perspective view of a configuration of the lifting apparatus in relation to an embodiment.
[FIG.4] FIG. 4 is a plan view of the lifting apparatus in relation to an embodiment, taken in A direction of FIG. 3.
[FIG. 5] FIG. 5 is a side view of an engagement part between a beam and a support column, taken in B direction of FIG.4.
[FIG. 6] FIG. 6 is a cross-sectional view of an engagement part between the beam and a rail, taken along C-C line of FIG.4.
[FIG. 7] FIG.7 is an illustration of conveyance of an object according to a maintenance method for the wind turbine generator in relation to an embodiment.
[FIG.8] FIG.8 is an illustration of conveyance of an object according to a maintenance method for the wind turbine generator in relation to an embodiment.
[FIG. 9A] FIG.9A is an illustration of one step of transferring a heavy object by a temporary lifting apparatus according to the maintenance method for the wind turbine in relation to an embodiment.
[FIG. 9B] FIG.9B is an illustration of another step of transferring a heavy object by a temporary lifting apparatus according to the maintenance method for the wind turbine in relation to an embodiment.
[FIG. 9C] FIG.9C is an illustration of yet another step of transferring a heavy object by a temporary lifting apparatus according to the maintenance method for the wind turbine in relation to an embodiment.

### [Description of Embodiments]

At least one embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

Herein, a lifting apparatus and a wind turbine generator in relation to an embodiment of the present invention are described and next, a maintenance method for the wind turbine generator by using the lifting apparatus is described.

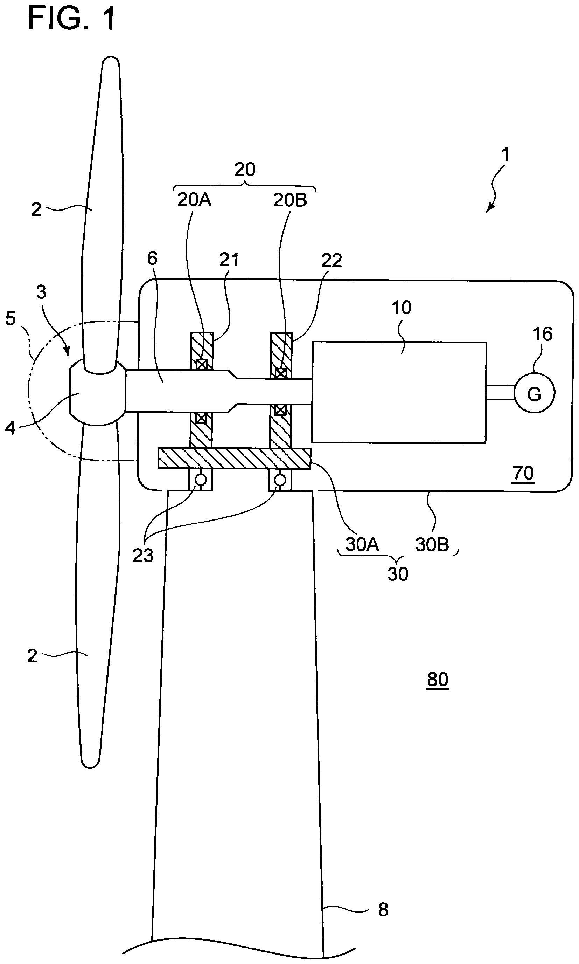

FIG. 1 is a schematic view of an overall configuration of the lifting apparatus and the wind turbine generator in relation to an embodiment.

As illustrated in FIG. 1, a wind turbine generator 1 is provided with a rotor 3 constituted by at least one blade 2 and a hub 4, a main shaft 6 coupled to the hub 4, a generator 16 for generating electric power, and a drive train 10 for transmitting rotational energy of the main shaft 6 to the generator 16.

A variety of devices including the main shaft 6 are accommodated in a nacelle 30 mounted on a tower 8 which is installed in a standing manner offshore or on the ground, and may be covered by a nacelle cover 30B of the nacelle 30. Further, the hub 4 may be covered by a hub cover (spinner) 5.

Furthermore, the tower 8 may be configured to support a nacelle bedplate 30A of the nacelle 30 via a yaw bearing 23.

A drive train 10 may be configured by a hydraulic drive train including a hydraulic pump, a high pressure oil line, a low pressure oil line and a hydraulic motor, or a mechanical speed increaser (gear type).

The wind turbine generator may be a direct-drive wind turbine generator which is configured such that the hub 4 and the generator 16 are directly connected without the drive train.

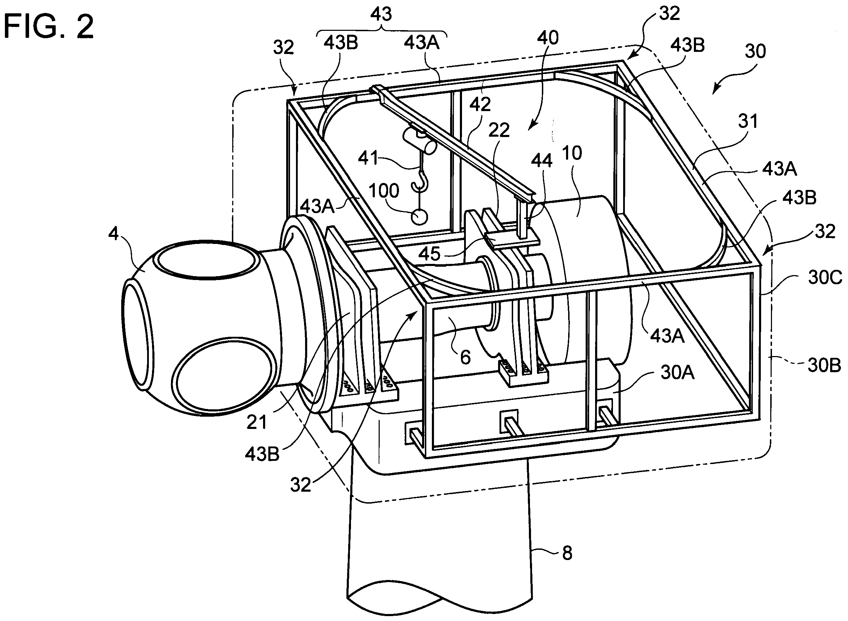

FIG.2 is an oblique perspective view of an exemplary configuration inside a nacelle of a lifting apparatus in relation to an embodiment.

In the exemplary embodiment illustrated in FIG.2, a lifting apparatus 40 installed in the nacelle 30 comprises a lifting unit 41, a beam 42 configured to support the lifting unit 41, a rail 43 placed in the nacelle 30, and a support column 44 installed in a standing manner in the nacelle 30.

The rail 43 is configured to engage with a distal end of the beam 42. The shape of the rail 43 is not particularly limited. The shape of the rail 43 may be a circular arc having single radius of curvature, a combination of arcs having different radiuses, a combination of a straight line part and a curved part, etc. In the exemplary embodiment illustrated in FIG.2, the rail 43 has an approximately rectangular shape formed by a combination of a straight line part (a part of an upper frame 31 except corners, which is described later) and a curved part (a curved frame 43B which is described later).

The support column 44 is configured to rotatably support the beam 42 so that the distal end of the beam 42 moves along the rail 43.

The beam 42 is attached to the support column 44 to be slidable relative to the support column 44 in a longitudinal direction of the beam 42.

The rail 43 is at least in part constituted by the upper frame 31 of the nacelle 30 which is disposed along an edge of a ceiling of the nacelle 30. In FIG.2, the straight line part of the rail 43 is formed by the upper frame 31 of the nacelle 30.

The upper frame 31 may have at least one corner 32, and the rail 43 may include a part 43A of the upper frame 31 except the at least one corner 32, and a curved frame 43B which is disposed on each of the at least one corner 32 and connected to the part 43A of the upper frame 31. In FIG.2, the upper frame 31 of a rectangular shape has four corners 32, and the rail 43 includes four straight line parts 43A of the upper frame 31 except the corners 32, and the curved frames 43B which are respectively disposed on the corners 32 and connected to the four straight line part 43A of the upper frame 31 so that the rail 43 overall has an approximately rectangular shape.

The beam 42 may be supported by a nacelle frame 30C which constitutes at least a part of the rail 43. Herein, the nacelle frame 30C is a structure which is arranged to surround objects accommodated in the nacelle 30 and which is configured to bear a structural strength of the nacelle 30.

The above-mentioned upper frame 31 is a section of the nacelle frame 30C which is disposed along an edge of a ceiling of the nacelle 30.

As illustrated in FIG.1, the wind turbine generator 1 may further comprise a pair of main bearings 20 (20A, 20B) which is configured to support the main shaft 6 to the nacelle 30.

The support column 44 of the lifting apparatus 40 may be supported by a bearing housing 22 of a rear bearing 20B of the pair of main bearings 20, which is disposed farther from the hub 4.

The support column 44 may be supported by the bearing housing 22 via a support column receiving part 45 (see FIG.2), instead of being directly connected to the bearing housing 22. With this configuration, the position of the support column 44 in the nacelle 30 can be adjusted by adjusting an extension amount of the support column receiving part 45 that extends from the bearing housing 22. Thus, it is possible to adjust the position of the support column 44 to be at the center of the nacelle 30. As a result, the movable range of the lifting unit 41 can cover a large area around the center of the nacelle 30.

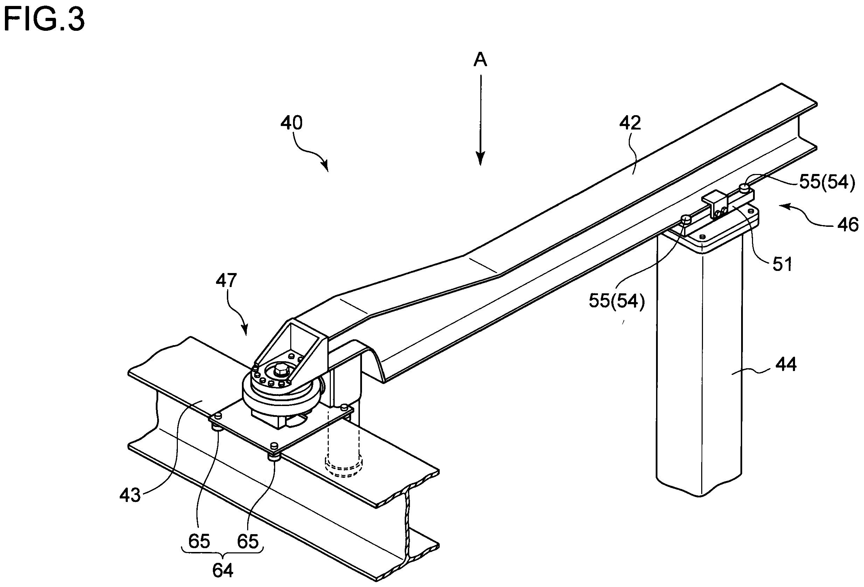

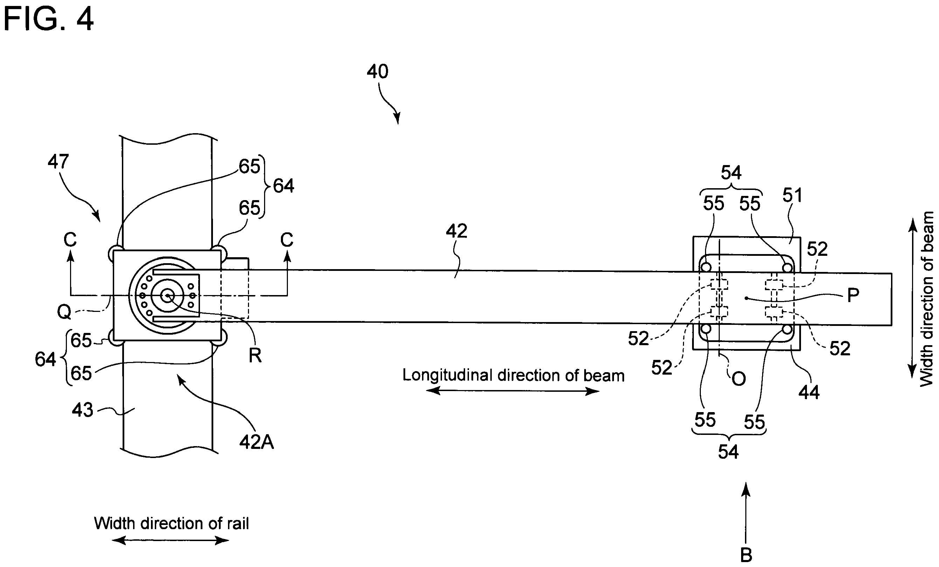

FIG. 3 is a perspective view of a configuration of the lifting apparatus in relation to an embodiment. FIG. 4 is a plan view of the lifting apparatus in relation to an embodiment, taken in A direction of FIG.3. In FIG.3 and FIG.4, the lifting unit 41 is not shown.

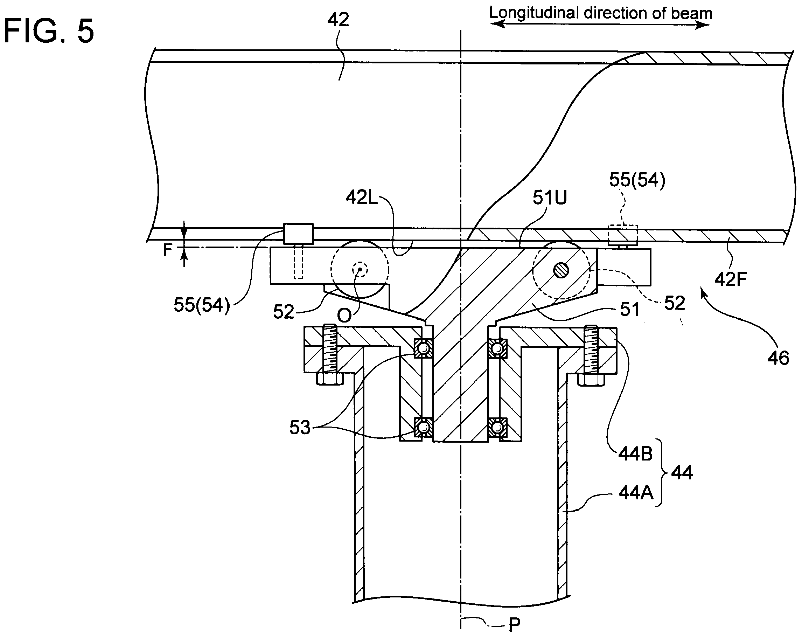

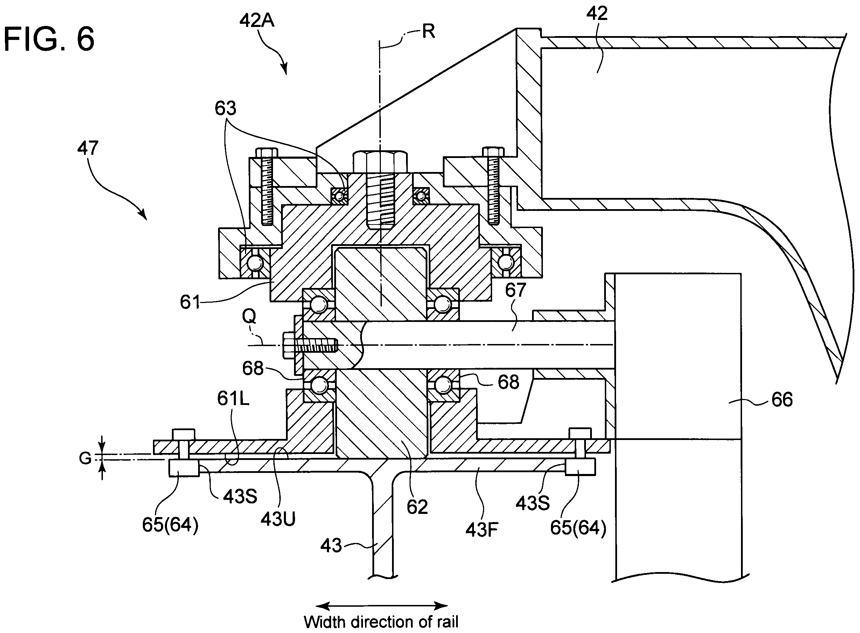

FIG. 5 is a side view of an engagement part (a first engagement part) between the beam and the support column, taken in B direction of FIG.4. FIG. 6 is a cross-sectional view of an engagement part (a second engagement part) between the distal end of the beam and the rail, taken along C-C line of FIG.4.

As illustrated in FIG.4 and FIG.5, the lifting apparatus 40 may further comprise a first member 51 and a first guide part 54 in the engagement part (the first engagement part) 46 between the beam 42 and the support column 44.

The first member 51 may be rotatably attached to a distal end of the support column 44 and configured to engage with the beam 42.

The first guide part 54 is provided for the first member 51 to guide the beam 42 so that the beam 42 is slidable relative to the first member 51 in the longitudinal direction of the beam 42.

A first bearing 53 may be provided between the first member 51 and the distal end of the support column 44 so as to rotatably support the first member 51 to the support column 44.

In the exemplary embodiment illustrated in FIG.5, the support column 33 includes a body portion 44A, a distal end portion 44B which is attached to the body portion 44A by flange fastening, and the first member 51 is attached to the distal end portion 44B of the support column 44 via the first bearing 53 which is described later. In this manner, the first member 51 is rotatably supported by the first bearing 53 to be rotatable relative to the support column 44 around a rotation axis P.

A first roller 52 may be provided for the first member 51 as illustrated in FIG.4 and FIG.5. The first roller 52 is configured to contact the beam 42 while rotating about a rotation axis O extending along the width direction of the beam 42.

In some embodiments, the first roller 52 contacts a bottom surface 42L of the beam 42, and there is a clearance F (see FIG.5) between a top surface 51U of the first member 51 and the bottom surface 42L of the beam 42 so that the top surface 51U of the first member 51 does not contact the bottom surface 42L of the beam 42. In this case, there is no frictional resistance between the top surface 51U of the first member 51 and the bottom surface 42L of the beam 42. As a result, the beam 42 can slide smoothly relative to the support column 44.

In the exemplary embodiment illustrated in FIG.4 and FIG.5, the beam 43 is formed by H-section steel and is configured such that the first roller 52 contacts the bottom surface 42L of a lower flange of the H-section.

Further, the first guide part 54 may comprise at least two first side rollers 55 disposed on both sides of the beam 42 in the width direction of the beam 42 to contact side faces of the beam 42. In one embodiment, the at least two first side rollers 55 are configured to contact the side faces of the lower flange 42F of the beam 42. In the exemplary embodiment illustrated in FIG.4 and FIG.5, a pair of the first side rollers 55 is disposed to sandwich the lower flange 42F, and such pair of the first side rollers 55 is provided on either side of the rotation axis P in the longitudinal direction of the beam 42. As a result, it is possible to reduce the load acting on each of the first side rollers 55 when the beam 42 rotates.

As illustrated in FIG.4 and FIG.6, the lifting apparatus 40 may further comprise a second member 61 and a second guide part 64 in the engagement part (the second engagement part) between the distal end of the beam 42 and the rail 43.

The second member 61 is rotatably attached to the distal end 42A of the beam 42 and configured to engage with the rail 43.

The second guide part 64 is provided for the second member 61 to guide the second member 61 so that the second member 61 is slidable along the rail 43.

In one embodiment, the rail 43 is formed by an H-section steel having a lower flange and an upper flange. FIG.6 illustrates the peripheral structure of the upper flange 43F of the rail. The lower flange of the rail 43 is not shown in the drawing.

A second bearing 63 may be provided between the second member 61 and the distal end of the beam 42 to rotatably support the second member 61 to the beam 42 so that the second member 61 is rotatable around the rotation axis R which is perpendicular to a top surface 43U of the rail 43.

Further, a second roller 62 may be provided for the second member 61. The second roller 62 is configured to contact the rail 43 while rotating about a rotation axis Q extending along the width direction of the rail 43.

Inside the second member 61, a recess is formed so that the second roller 62 is fitted therein. A power source such as a motor 66 may be attached to the second member 61. The motor 66 is configured to transmit power to the second roller 62 via a rotation shaft 67. The rotation shaft 67 of the second roller 62 may be attached to the second member 61 via a bearing 68.

A bottom surface 61L of the second member 61 is not in direct contact with the top surface 43U of the upper flange 43F of the rail 43 (hereinafter also referred to as "rail top surface". In contrast, the second roller 62, which has the rotation shaft 67 attached to the second member 61 via the bearing 68, is in contact with the rail top surface 43U. Therefore, there is a clearance G between the bottom surface 61L of the second member 61 and the rail top surface 43U. With this configuration, there is no frictional resistance between the bottom surface 61L of the second member 61 and the rail top surface 43U. As a result, the distal end of the beam 42 can slide smoothly relative to the rail 43.

Further, the second guide part 64 may comprise at least two second side rollers 65 disposed on both sides of the rail 42 in the width direction of the rail 42 to contact side faces of the rail 42.

In some embodiments, the at least two second side rollers 61 are configured to contact the side faces 43S of the upper flange 43A of the rail 43. In the exemplary embodiment illustrated in FIG.4 and FIG.6, a pair of the second side rollers 62 is disposed to sandwich the upper flange 43A, and such pair of the second side rollers 62 is provided on either side of the rotation axis R in the longitudinal direction of the rail 43. As a result, it is possible to reduce the load acting on each of the second side rollers 62 when the beam 42 rotates.

The lifting unit 41 may be any equipment capable of lifting a cargo and may include one of a winch, a hoist or a crane.

Now, the maintenance method for the wind turbine generator in relation to an embodiment of the present invention is described.

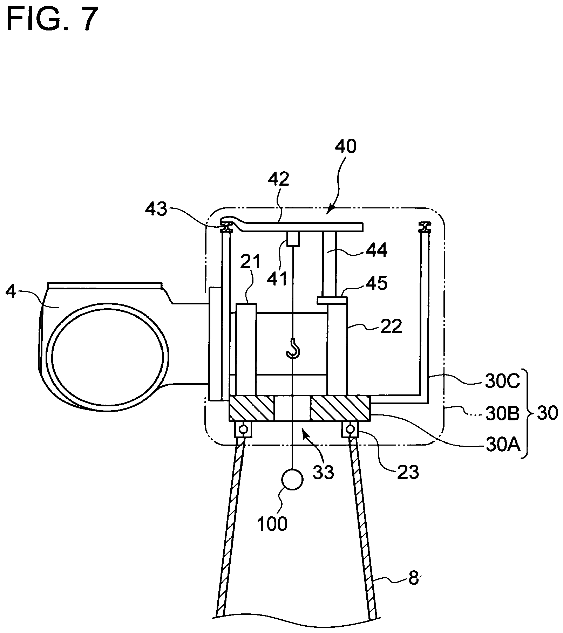

FIG.7 is an illustration of conveyance of an object according to the maintenance method for the wind turbine generator in relation to an embodiment.

The maintenance method for the wind turbine generator according to one embodiment comprises an object transferring step of transferring an object 100 using the lifting apparatus 40 installed in the nacelle 30, as illustrated in FIG.7. Specifically, the object 100 is transferred by the above described lifting apparatus 40 installed in the nacelle 30, between the nacelle 30 and the tower 8 through an inside of the yaw bearing 23. An opening 33 is provided in the nacelle bedplate 30A so that the object 100 can pass through.

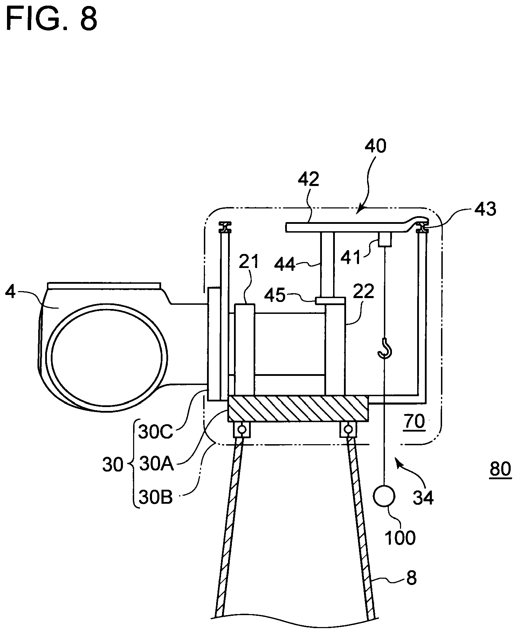

FIG.8 is an illustration of conveyance of the object according to the maintenance method for the wind turbine generator in relation to another embodiment.

In the maintenance method for the wind turbine generator in relation to this embodiment, as illustrated in FIG.8, in the object transferring step, the object 100 may be transferred by the lifting apparatus 40 installed in the nacelle 30, between an interior space 70 and an exterior space 80 of the nacelle 30 through an opening 34 provided in a floor of the nacelle 30.

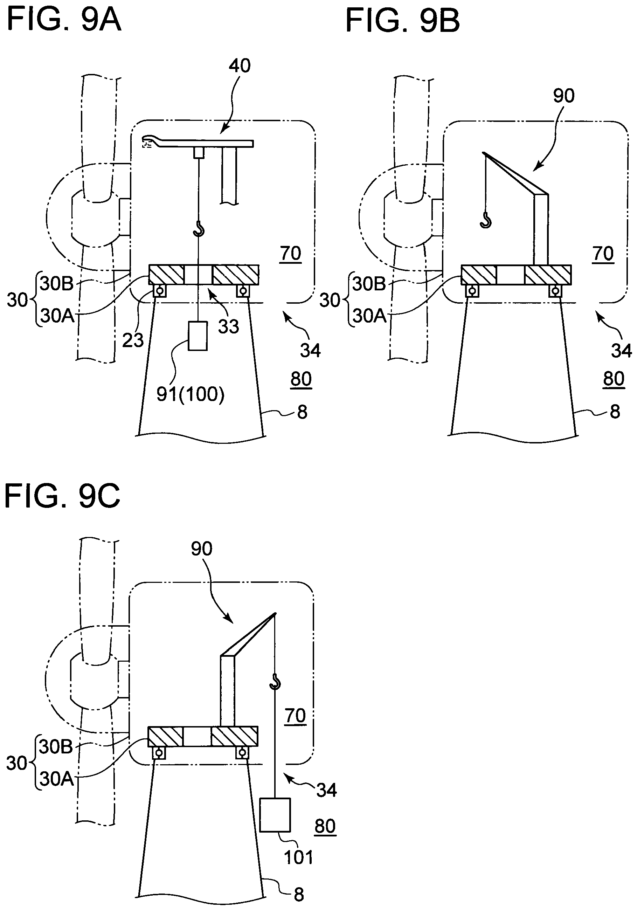

FIG.9A, FIG.9B and FIG.9C illustrate the process of transferring a heavy object by a temporary lifting apparatus according to the maintenance method for the wind turbine in relation to an embodiment.

In the maintenance method for the wind turbine generator in relation to this embodiment, the object 100 to be transferred is a component 91 of a temporary lifting apparatus 90 which has a lifting capacity larger than the lifting apparatus 40. In the object transferring step, as illustrated in FIG.9A, the component 91 of the temporary lifting apparatus 90 is transferred into the nacelle 30 by the lifting apparatus 40. FIG.9A illustrates transferring of the component 91 from the tower 8 into the nacelle 30 through the inside of the yaw bearing 23. This is, however, not restrictive and the component 91 may be transferred from the exterior space 80 into the interior space 70 of the nacelle 30 through the opening 34 provided in the floor of the nacelle 30.

Then, in an installation step, as illustrated in FIG.9B, the components 91 are assembled into the temporary lifting apparatus 90, and the temporary lifting apparatus 90 is installed in the nacelle 30 as illustrated in the drawing.

Finally, in a heavy object transferring step, as illustrated in FIG.9C, a heavy object 101 which is heavier than the object 100 is transferred by the temporary lifting apparatus 90, between the interior space 70 and the exterior space 80 of the nacelle 30 through the opening 34 provided in the floor of the nacelle 30.

### [Reference Signs list]

- 1: Wind turbine generator
- 2: Blade
- 3: Rotor
- 4: Hub
- 5: Hub cover
- 6: Rotation shaft
- 8: Tower
- 10: Drive train
- 16: Generator
- 20: Main bearing
- 20A: Front bearing
- 20B: Rear bearing
- 21: Bearing housing
- 22: Bearing housing
- 23: Yaw bearing
- 30: Nacelle
- 30A: Nacelle bedplate
- 30B: Nacelle cover
- 30C: Nacelle frame
- 31: Nacelle upper frame
- 32: Corner
- 33: Opening
- 34: Opening
- 40: Lifting apparatus
- 41: Lifting unit
- 42: Beam
- 42A: Distal end of beam
- 42L: Beam bottom face
- 42F: Lower flange of beam
- 43: Rail
- 43A: Part of upper frame except corner
- 43B: Curved frame
- 43U: Top surface of rail
- 43F: Upper flange of rail
- 44: Support column
- 45: Support column receiving part
- 46: Engagement part
- 47: Engagement part
- 51: First member
- 51U: Top surface of first member
- 52: First roller
- 53: First bearing
- 54: First guide part
- 55: First side roller
- 61: Second member
- 61L: Second bottom surface
- 62: Second roller
- 63: Second bearing
- 64: Second guide part
- 65: Second side roller
- 66: Motor
- 67: Rotation shaft
- 70: Interior space of nacelle
- 80: Exterior space of nacelle
- 90: Temporary lifting apparatus
- 91: Component of temporary lifting apparatus
- 100: Object
- 101: Heavy object
- F: Clearance
- G: Clearance
- O: Rotation axis of first roller
- P: Rotation axis of first member
- Q: Rotation axis of second roller
- R: Rotation axis of second member

## Claims

1. A lifting apparatus installed in a nacelle (30) for a wind turbine generator (1), the apparatus comprising:
a lifting unit (41);
a beam (42) configured to support the lifting unit;
a rail (43) placed in the nacelle and configured to engage with a distal end of the beam; and
a support column (44) installed in a standing manner in the nacelle (30) and configured to rotatably support the beam (42) so that the distal end of the beam moves along the rail (43),
**characterized in that** the beam (42) is attached to the support column (44) to be slidable relative to the support column in a longitudinal direction of the beam.

2. The lifting apparatus for the wind turbine generator according to claim 1,
wherein the rail (43) is at least in part constituted by an upper frame of the nacelle which is disposed along an edge of a ceiling of the nacelle (30).

3. The lifting apparatus for the wind turbine generator according to claim 2,
wherein the upper frame has at least one corner (32), and
wherein the rail (43) includes a part (43A) of the upper frame except the at least one corner, and a curved frame (43B) which is disposed on each of the at least one corner (32) and connected to said part of the upper frame.

4. The lifting apparatus for the wind turbine generator according to any one of claims 1 to 3,
wherein the beam (42) is supported by a nacelle frame which constitutes at least a part of the rail (43) and which bears a structural strength of the nacelle (30).

5. The lifting apparatus for the wind turbine generator according to any one of claims 1 to 4, further comprising:
a first member (51) rotatably attached to a distal end of the support column (44) and configured to engage with the beam (42); and
a first guide part (54) provided for the first member (51) to guide the beam so that the beam is slidable relative to the first member in the longitudinal direction.

6. The lifting apparatus for the wind turbine generator according to claim 5, further comprising:
a first bearing (53) provided between the first member (51) and the distal end of the support column (44) so as to rotatably support the first member to the support column; and
a first roller (52) provided for the first member (51) and configured to contact the beam (42) while rotating about a rotation axis (O) of the first roller, said rotation axis (O) extending along a width direction of the beam,
wherein the first guide part (54) comprises at least two first side rollers (55) disposed on both sides of the beam (42) in the width direction to contact side faces of the beam.

7. The lifting apparatus for the wind turbine generator according to any one of claims 1 to 6, further comprising:
a second member (61) rotatably attached to the distal end of the beam (42) and configured to engage with the rail (43); and
a second guide part (64) provided for the second member to guide the second member so that the second member is slidable along the rail.

8. The lifting apparatus for the wind turbine generator according to claim 7, further comprising:
a second bearing (63) provided between the second member (61) and the distal end of the beam (42) to rotatably support the second member to the beam; and
a second roller (62) provided for the second member (61) and configured to contact the rail (43) while rotating about a rotation axis (Q) of the second roller, said rotation axis extending along a width direction of the rail,
wherein the second guide part (64) comprises at least two second side rollers (65) disposed on both sides of the rail (43) in the width direction to contact side faces of the rail.

9. The lifting apparatus for the wind turbine generator according to any one of claims 1 to 8,
wherein the lifting unit (41) includes one of a winch, a hoist or a crane.

10. A wind turbine generator comprising:
a nacelle (30); and
the lifting apparatus (40) according to any one of claims 1 to 9, installed in the nacelle.

11. The wind turbine generator according to claim 10, further comprising:
at least one blade (2);
a hub (4) on which each of the at least one blade (2) is mounted;
a main shaft connected to the hub (4); and
a pair of main bearings (20) configured to support the main shaft to the nacelle (30),
wherein the support column (44) is supported by a bearing housing (22) of rear one (20B) of the pair of main bearings (20) which is disposed farther from the hub.

12. A maintenance method for a wind turbine generator comprising:
an object transferring step of transferring an object using the lifting apparatus (40) according to any one of claims 1 to 9, installed in a nacelle of the wind turbine generator,
wherein, in the object transferring step, the beam (42) is rotated about the support column (44) to move the distal end of the beam along the rail while allowing the beam to slide relative to the support column in a longitudinal direction of the beam so as to move the lifting unit.

13. The maintenance method for the wind turbine generator according to claim 12,
wherein the wind turbine generator (1) comprises a tower (8) which is configured to support the nacelle (30) via a yaw bearing (23), and
wherein, in the object transferring step, the object is transferred by the lifting apparatus (40) between the nacelle and the tower through an inside of the yaw bearing (23).

14. The maintenance method for the wind turbine generator according to claim 12,
wherein, in the object transferring step, the object is transferred by the lifting apparatus between an interior space and an exterior space of the nacelle through an opening (33) provided in a floor of the nacelle.

15. The maintenance method for the wind turbine generator according to any one of claims 12 to 14,
wherein the object is at least one component (91) of a temporary lifting apparatus (90) which has a lifting capacity larger than the lifting apparatus (40),
wherein, in the object transferring step, the at least one component (91) is transferred into the nacelle (30) by the lifting apparatus, and
wherein the maintenance method further comprises:
after the object transferring step, an installation step of assembling the at least one component into the temporary lifting apparatus (90) and installing the temporary lifting apparatus in the nacelle; and
a heavy object transferring step of transferring a heavy object which is heavier than the object by the temporary lifting apparatus between an interior space and an exterior space of the nacelle through an opening (34) provided in a floor of the nacelle.

## Patentansprüche

1. Hebevorrichtung, die in einer Gondel (30) für einen Windturbinengenerator (1) installiert ist, wobei die Vorrichtung umfasst:
eine Hebeeinheit (41),
einen Ausleger (42), der dafür konfiguriert ist, die Hebeeinheit zu stützen,
eine Schiene (43), die in der Gondel angeordnet ist und dafür konfiguriert ist, ein distales Ende des Auslegers in Eingriff zu nehmen, und
einen Stützpfeiler (44), der in einer aufrecht stehenden Weise in der Gondel (30) installiert ist und dafür konfiguriert ist, den Ausleger (42) drehbar so zu stützen, dass sich das distale Ende des Auslegers entlang der Schiene (43) bewegt,
**dadurch gekennzeichnet, dass** der Ausleger (42) so an dem Stützpfeiler (44) angebracht ist, dass er relativ zu dem Stützpfeiler in einer Längsrichtung des Auslegers verschiebbar ist.

2. Hebevorrichtung für den Windturbinengenerator nach Anspruch 1,
wobei die Schiene (43) mindestens teilweise durch einen oberen Rahmen der Gondel gebildet wird, der entlang eines Randes einer Decke der Gondel (30) angeordnet ist.

3. Hebevorrichtung für den Windturbinengenerator nach Anspruch 2,
wobei der obere Rahmen mindestens eine Ecke (32) hat, und
wobei die Schiene (43) einen Teil (43A) des oberen Rahmens enthält, mit Ausnahme der mindestens einen Ecke, und einen gekrümmten Rahmen (43B) enthält, der an jeder der mindestens einen Ecke (32) angeordnet ist und mit dem Teil des oberen Rahmens verbunden ist.

4. Hebevorrichtung für den Windturbinengenerator nach einem der Ansprüche 1 bis 3,
wobei der Ausleger (42) durch einen Gondelrahmen gestützt wird, der mindestens einen Teil der Schiene (43) bildet und der eine strukturelle Festigkeit der Gondel (30) trägt.

5. Hebevorrichtung für den Windturbinengenerator nach einem der Ansprüche 1 bis 4, ferner umfassend:
ein erstes Element (51), das drehbar an einem distalen Ende des Stützpfeilers (44) angebracht ist und dafür konfiguriert ist, den Ausleger (42) in Eingriff zu nehmen, und
einen ersten Führungsteil (54), der für das erste Element (51) bereitgestellt ist, um den Ausleger so zu führen, dass der Ausleger relativ zu dem ersten Element in der Längsrichtung verschiebbar ist.

6. Hebevorrichtung für den Windturbinengenerator nach Anspruch 5, ferner umfassend:
ein erstes Lager (53), das zwischen dem ersten Element (51) und dem distalen Ende des Stützpfeilers (44) so angeordnet ist, dass es das erste Element drehbar an dem Stützpfeiler stützt, und
eine erste Rolle (52), die für das erste Element (51) bereitgestellt ist und dafür konfiguriert ist, den Ausleger (42) zu kontaktieren, während er sich um eine Rotationsachse (O) der ersten Rolle dreht, wobei sich die Rotationsachse (O) entlang einer Breitenrichtung des Auslegers erstreckt,
wobei der erste Führungsteil (54) mindestens zwei erste Seitenrollen (55) umfasst, die auf beiden Seiten des Auslegers (42) in der Breitenrichtung so angeordnet sind, dass sie Seitenflächen des Auslegers kontaktieren.

7. Hebevorrichtung für den Windturbinengenerator nach einem der Ansprüche 1 bis 6, ferner umfassend:
ein zweites Element (61), das drehbar an dem distalen Ende des Auslegers (42) angebracht ist und dafür konfiguriert ist, die Schiene (43) in Eingriff zu nehmen, und
einen zweiten Führungsteil (64), der für das zweite Element bereitgestellt ist, um das zweite Element so zu führen, dass das zweite Element entlang der Schiene verschiebbar ist.

8. Hebevorrichtung für den Windturbinengenerator nach Anspruch 7, ferner umfassend:
ein zweites Lager (63), das zwischen dem zweiten Element (61) und dem distalen Ende des Auslegers (42) angeordnet ist, um das zweite Element drehbar an dem Ausleger zu stützen, und
eine zweite Rolle (62), die für das zweite Element (61) bereitgestellt ist und dafür konfiguriert ist, die Schiene (43) zu kontaktieren, während sie sich um eine Rotationsachse (Q) der zweiten Rolle dreht, wobei sich die Rotationsachse entlang einer Breitenrichtung der Schiene erstreckt,
wobei der zweite Führungsteil (64) mindestens zwei zweite Seitenrollen (65) umfasst, die auf beiden Seiten der Schiene (43) in der Breitenrichtung so angeordnet sind, dass sie Seitenflächen der Schiene kontaktieren.

9. Hebevorrichtung für den Windturbinengenerator nach einem der Ansprüche 1 bis 8,
wobei die Hebeeinheit (41) eine Winde, einen Flaschenzug oder einen Kran enthält.

10. Windturbinengenerator, umfassend:
eine Gondel (30), und
die Hebevorrichtung (40) nach einem der Ansprüche 1 bis 9, die in der Gondel installiert ist.

11. Windturbinengenerator nach Anspruch 10, ferner umfassend:
mindestens einen Flügel (2),
eine Nabe (4), an der jeder der mindestens einen Flügel (2) montiert ist,
eine Hauptwelle, die mit der Nabe (4) verbunden ist, und
ein Paar Hauptlager (20), die dafür konfiguriert sind, die Hauptwelle an der Gondel (30) zu stützen,
wobei der Stützpfeiler (44) durch ein Lagergehäuse (22) des hinteren (20B) des Paares von Hauptlagern (20) gestützt wird, das weiter von der Nabe weg angeordnet ist.

12. Wartungsverfahren für einen Windturbinengenerator, umfassend:
einen Objekttransferierungsschritt zum Transferieren eines Objekts unter Verwendung der Hebevorrichtung (40) nach einem der Ansprüche 1 bis 9, die in einer Gondel des Windturbinengenerators installiert ist,
wobei, in dem Objekttransferierungsschritt, der Ausleger (42) um den Stützpfeiler (44) gedreht wird, um das distale Ende des Auslegers entlang der Schiene zu bewegen, während es dem Ausleger möglich ist, relativ zu dem Stützpfeiler in einer Längsrichtung des Auslegers so zu gleiten, dass die Hebeeinheit bewegt wird.

13. Wartungsverfahren für den Windturbinengenerator nach Anspruch 12,
wobei der Windturbinengenerator (1) einen Mast (8) umfasst, der dafür konfiguriert ist, die Gondel (30) über ein Gierlager (23) zu stützen, und
wobei, in dem Objekttransferierungsschritt, das Objekt durch die Hebevorrichtung (40) zwischen der Gondel und dem Mast durch das Innere des Gierlagers (23) hindurch transferiert wird.

14. Wartungsverfahren für den Windturbinengenerator nach Anspruch 12,
wobei, in dem Objekttransferierungsschritt, das Objekt durch die Hebevorrichtung zwischen einem inneren Raum und einem äußeren Raum der Gondel durch eine Öffnung (33) hindurch, die in einem Boden der Gondel ausgebildet ist, transferiert wird.

15. Wartungsverfahren für den Windturbinengenerator nach einem der Ansprüche 12 bis 14,
wobei das Objekt mindestens eine Komponente (91) einer zeitweiligen Hebevorrichtung (90) ist, deren Tragfähigkeit größer ist als die der Hebevorrichtung (40),
wobei, in dem Objekttransferierungsschritt, die mindestens eine Komponente (91) durch die Hebevorrichtung in die Gondel (30) hinein transferiert wird, und
wobei das Wartungsverfahren ferner umfasst
nach dem Objekttransferierungsschritt, einen Installationsschritt zum Montieren der mindestens einen Komponente in die zeitweilige Hebevorrichtung (90) hinein und zum Installieren der zeitweiligen Hebevorrichtung in der Gondel, und
einen Schwerlasttransferierungsschritt zum Transferieren eines schweren Objekts, das schwerer als das Objekt ist, durch die zeitweilige Hebevorrichtung zwischen einem inneren Raum und einem äußeren Raum der Gondel durch eine Öffnung (34) hindurch, die in einem Boden der Gondel ausgebildet ist.

## Revendications

1. Appareil de levage installé dans une nacelle (30) pour une éolienne (1), l'appareil comportant :
une unité de levage (41) ;
une poutre (42) configurée pour supporter l'unité de levage ;
un rail (43) placé dans la nacelle et configuré pour engager une extrémité distale de la poutre ; et
une colonne de support (44) installée d'une manière dressée dans la nacelle (30) et configurée pour supporter de façon rotative la poutre (42) de telle sorte que l'extrémité distale de la poutre se déplace le long du rail (43),
**caractérisé en ce que** la poutre (42) est fixée sur la colonne de support (44) pour pouvoir coulisser par rapport à la colonne de support dans une direction longitudinale de la poutre.

2. Appareil de levage pour l'éolienne selon la revendication 1, dans lequel le rail (43) est au moins en partie constitué par un bâti supérieur de la nacelle qui est disposé le long d'un bord d'un plafond de la nacelle (30).

3. Appareil de levage pour l'éolienne selon la revendication 2, dans lequel le bâti supérieur a au moins un coin (32), et dans lequel le rail (43) comprend une partie (43A) du bâti supérieur à l'exception du au moins un coin, et un bâti courbe (43B) qui est disposé sur chacun du au moins un coin (32) et relié à ladite partie du bâti supérieur.

4. Appareil de levage pour l'éolienne selon l'une quelconque des revendications 1 à 3, dans lequel la poutre (42) est supportée par un bâti de nacelle qui constitue au moins une partie du rail (43) et qui supporte une résistance structurelle de la nacelle (30).

5. Appareil de levage pour l'éolienne selon l'une quelconque des revendications 1 à 4, comportant en outre :
un premier élément (51) fixé de façon rotative sur une extrémité distale de la colonne de support (44) et configuré pour engager la poutre (42) ; et
une première partie de guidage (54) prévue pour le premier élément (51) afin de guider la poutre de telle sorte que la poutre peut coulisser par rapport au premier élément dans la direction longitudinale.

6. Appareil de levage pour l'éolienne selon la revendication 5, comportant en outre :
un premier palier (53) prévu entre le premier élément (51) et l'extrémité distale de la colonne de support (44) de façon à supporter de façon rotative le premier élément sur la colonne de support ; et
un premier rouleau (52) prévu pour le premier élément (51) et configuré pour venir en contact avec la poutre (42) tout en tournant autour d'un axe de rotation (O) du premier rouleau, ledit axe de rotation (O) s'étendant le long d'une direction de largeur de la poutre,
dans lequel la première partie de guidage (54) comporte au moins deux premiers rouleaux latéraux (55) disposés des deux côtés de la poutre (42) dans la direction de largeur pour venir en contact avec des faces latérales de la poutre.

7. Appareil de levage pour l'éolienne selon l'une quelconque des revendications 1 à 6, comportant en outre :
un deuxième élément (61) fixé de façon rotative sur l'extrémité distale de la poutre (42) et configuré pour engager le rail (43) ; et
une deuxième partie de guidage (64) prévu pour le deuxième élément afin de guider le deuxième élément de telle sorte que le deuxième élément peut coulisser le long du rail.

8. Appareil de levage pour l'éolienne selon la revendication 7, comportant en outre :
un deuxième palier (63) prévu entre le deuxième élément (61) et l'extrémité distale de la poutre (42) pour supporter de façon rotative le deuxième élément sur la poutre ; et
un deuxième rouleau (62) prévu pour le deuxième élément (61) et configuré pour venir en contact avec le rail (43) tout en tournant autour d'un axe de rotation (Q) du deuxième rouleau, ledit axe de rotation s'étendant le long d'une direction de largeur du rail,
dans lequel la deuxième partie de guidage (64) comporte au moins deux deuxièmes rouleaux latéraux (65) disposés des deux côtés du rail (43) dans la direction de largeur pour venir en contact avec des faces latérales du rail.

9. Appareil de levage pour l'éolienne selon l'une quelconque des revendications 1 à 8, dans lequel l'unité de levage (41) comprend l'un d'un treuil, d'un palan ou d'une grue.

10. Eolienne comportant :
une nacelle (30) ; et
l'appareil de levage (40) selon l'une quelconque des revendications 1 à 9, installé dans la nacelle.

11. Eolienne selon la revendication 10, comportant en outre :
au moins une pale (2) ;
un moyeu (4) sur lequel chacune de la au moins une pale (2) est montée ;
un arbre principal relié au moyeu (4) ; et
une paire de paliers principaux (20) configurés pour supporter l'arbre principal dans la nacelle (30),
dans lequel la colonne de support (44) est supportée par un logement de palier (22) d'un palier arrière (20B) de la paire de paliers principaux (20) qui est disposé plus loin du moyeu.

12. Procédé de maintenance pour une éolienne comportant :
une étape de transfert d'objet destinée à transférer un objet en utilisant l'appareil de levage (40) selon l'une quelconque des revendications 1 à 9, installé dans une nacelle de l'éolienne,
selon lequel, dans l'étape de transfert d'objet, la poutre (42) est tournée autour de la colonne de support (44) pour déplacer l'extrémité distale de la poutre le long du rail tout en permettant à la poutre de coulisser par rapport à la colonne de support dans une direction longitudinale de la poutre de façon à déplacer l'unité de levage.

13. Procédé de maintenance pour l'éolienne selon la revendication 12, selon lequel l'éolienne (1) comporte une tour (8) qui est configurée pour supporter la nacelle (30) par l'intermédiaire d'un palier de lacet (23), et selon lequel, dans l'étape de transfert d'objet, l'objet est transféré par l'appareil de levage (40) entre la nacelle et la tour à travers l'intérieur du palier de lacet (23).

14. Procédé de maintenance pour l'éolienne selon la revendication 12, selon lequel, dans l'étape de transfert d'objet, l'objet est transféré par l'appareil de levage entre un espace intérieur et un espace extérieur de la nacelle à travers une ouverture (33) prévue dans un plancher de la nacelle.

15. Procédé de maintenance pour l'éolienne selon l'une quelconque des revendications 12 à 14, selon lequel l'objet est au moins un composant (91) d'un appareil de levage provisoire (90) qui a une capacité de levage plus grande que l'appareil de levage (40),
selon lequel, dans l'étape de transfert d'objet, le au moins un composant (91) est transféré dans la nacelle (30) par l'appareil de levage, et
selon lequel le procédé de maintenance comporte en outre :
après l'étape de transfert d'objet, une étape d'installation destinée à assembler le au moins un composant dans l'appareil de levage provisoire (90) et installer l'appareil de levage provisoire dans la nacelle ; et
une étape de transfert d'objet lourd destinée à transférer un objet lourd qui est plus lourd que l'objet par l'appareil de levage provisoire entre un espace intérieur et un espace extérieur de la nacelle à travers une ouverture (34) prévue dans un plancher de la nacelle.
